(19) Europäisches Patentamt
European Patent Office
Office européen des brevets

(11) Veröffentlichungsnummer: **0 685 254 A2**

(12) # EUROPÄISCHE PATENTANMELDUNG

(21) Anmeldenummer: **95107515.9**

(51) Int. Cl.⁶: **B01D 71/56**

(22) Anmeldetag: **17.05.95**

(30) Priorität: **30.05.94 DE 4418843**

(43) Veröffentlichungstag der Anmeldung:
**06.12.95 Patentblatt 95/49**

(84) Benannte Vertragsstaaten:
**DE FR GB IT**

(71) Anmelder: **HOECHST AKTIENGESELLSCHAFT**
**Brüningstrasse 50**
**D-65929 Frankfurt am Main (DE)**

(72) Erfinder: **Wagener, Reinhard, Dr.**
**Kapellenstrasse 30**
**D-65439 Flörsheim (DE)**
Erfinder: **Blatter, Karsten, Dr.**
**Kirchgasse 18**
**D-65817 Eppstein (DE)**
Erfinder: **Schneller, Arnold, Dr.**
**Aubachstrasse 9a**
**D-55126 Mainz (DE)**
Erfinder: **Clauss, Joachim, Dr.**
**Johannesallee 41**
**D-65929 Frankfurt (DE)**

(54) **Poröse Membrane aus aromatischem Polyamid.**

(57) Die Erfindung betrifft eine poröse, asymmetrische Membran, die als Hauptkomponente ein aromatisches Polyamid aufweist, das aus Einheiten der allgemeinen Formel (I) aufgebaut ist

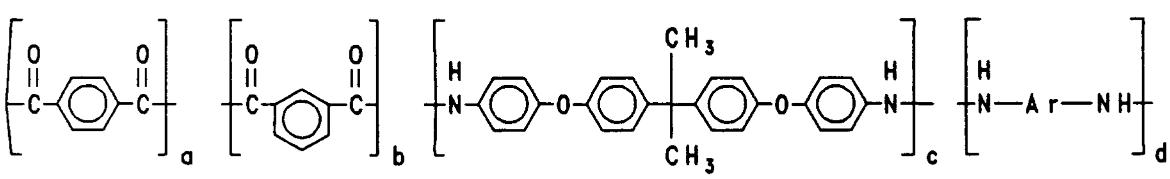

(I)

in dieser Formel bedeutet Ar eine 1,3- oder 1,4-Phenylengruppe oder deren Gemisch. Die Indizes a, b, c und d werden so gewählt, daß a + b = 1 und die Summe c + d mindestens 0,9 und höchstens 1,1 beträgt. Der Wert für c beträgt mindestens 0,4. Die Membran wird hergestellt nach dem Phaseninversions-Verfahren. Die zunächst erhaltene feuchte Membran kann ohne Stabilisierungshilfsmittel getrocknet werden. Danach besitzt sie eine hydraulische Permeabilität für Wasser von mindestens 20 $l/m^2$ h bei einem Transmembrandruck von p = 3 bar. Die Permeabilität für Stickstoff, Sauerstoff oder Luft beträgt mindestens $1 \cdot 10^6$ barrer/cm. Die Membran kann eingesetzt werden für die Ultra-, Mikro- und Nanofiltration.

EP 0 685 254 A2

Die Erfindung betrifft poröse Membrane, die für die Mikro-, Ultra- oder Nanofiltration geeignet sind und aus aromatischen Polyamiden oder deren Mischungen mit weiteren Polymeren bestehen und deren poröse Struktur auch im Trockenzustand erhalten bleibt.

Membranen und Membrantrennprozesse fanden erstmals eine breite technische Anwendung, nachdem es gelang, Membranen mit hoher Asymmetrie herzustellen (Adv. Chem. Ser. 38, 117 (1962)). Der dafür entscheidende Herstellprozeß der Phaseninversion wurde zunächst für Zelluloseacetat entwickelt und später erfolgreich auch auf hydrophobe Polymere, z.B. Polysulfon, übertragen. In der Zwischenzeit wurde eine Vielzahl von Polymerstrukturen für Membrane vorgeschlagen und geprüft (Desalination, 35, 5 bis 20, (1980)-), von denen einige auch Eingang in die Technik und für medizinische Zwecke gefunden haben.

Ganz allgemein werden poröse Membrane (neben der Pervaporation mit unporösen Membranen) zur Abtrennung von in Wasser gelösten oder suspendierten Bestandteilen eingesetzt. In zunehmendem Maße wird dies für verschiedenste Arten von Prozeßwasserströmen verlangt. Beim Einsatz kommerzieller Membrane treten dabei jedoch Probleme auf, die vom Fachmann mit dem Begriff "Fouling" bezeichnet werden. Unter Fouling versteht man das Verstopfen von Membranporen oder die irreversible Adsorption von Komponenten des Zulaufs an die Membranoberfläche. In der Regel spielen dabei hydrophobe, das heißt unpolare Wechselwirkungskräfte eine wichtige Rolle. Es hat sich gezeigt, daß Membrane mit hydrophiler Oberfläche das Fouling in wäßrigen Lösungen unterdrücken können. Asymmetrische Membrane mit hydrophiler Oberfläche können aus hydrophilen Polymeren natürlichen oder synthetischen Ursprungs erhalten werden.

Das bereits genannte Zelluloseacetat ist ein solches hydrophiles, membranbildendes Polymer natürlichen Ursprungs. Es weist jedoch als Membranmaterial einige Nachteile auf:
Membrane aus Zelluloseacetat sind sehr empfindlich gegenüber Temperaturen über 35 °C und sie werden relativ leicht von Mikroorganismen angegriffen. Außerdem unterliegen sie in sauren oder basischen Medien der Hydrolyse. Die Polymerchemie hat daher die Aufgabe, synthetische, hydrophile Polymere für die Membranherstellung mit guter Stabilität bereitzustellen.
Als hydrophile, membranbildende Polymere mit guter chemischer Beständigkeit gegen Reinigungsagentien und organische Lösemittel, mit guter thermischer Stabilität und mit guter biologischer Resistenz sind insbesondere aromatische Copolyamide (EP 325 962, EP 539 870, EP 501 425) sowie aromatische Copolyetheramide (EP 543 171) und deren Legierungen mit Polyvinylpyrrolidon (= PVP) (EP 382 009) beschrieben worden. Poröse Membrane vom Mikro-, Ultra- oder Nanofiltrationstyp aus diesen Materialien weisen in vielen Fällen gute antiadsorptive Eigenschaften und ein geringes Fouling auf.

Aromatische Polyamide zeichnen sich ebenso wie andere hydrophile Polymere durch starke intermolekulare, polare Wechselwirkungskräfte aus. Diese Kräfte können beispielsweise vom Dipol-Dipol- oder Wasserstoffbrückentyp sein. Dies bewirkt, daß Wasser sehr effektiv mit anderen Molekülen um die Adsorption an die Oberfläche dieser Polymere konkurrieren kann. Eine irreversible Adsorption von Probegut an die Membranoberfläche ist deshalb in wäßriger Umgebung stark erschwert. Diese polaren Wechselwirkungen müssen jedoch an der trockenen Oberfläche des Polymers ungesättigt bleiben. Daher mißt man für hydrophile Polymere hohe Werte der kritischen Oberflächenspannung. Insbesondere für poröse Membrane mit einer Volumenporosität von mindestens 70 % ist die resultierende freie Oberflächenenergie außerordentlich hoch.

Aufgrund der hohen kritischen Oberflächenspannung des Polymers und ihrer hohen Volumenporosität können diese Membrane deshalb nicht ohne besondere Vorkehrungen getrocknet werden. Die Oberflächenspannung erreicht beim Entfernen der porenfüllenden Flüssigkeit so hohe Werte, daß die poröse Membranstruktur kollabiert. Nach dem Stande der Technik (EP 0 325 962, EP 539 870, EP 501 425, EP 382 009) verfährt man zur Stabilisierung und Lagerung der Membrane so, daß man die Porenflüssigkeit Wasser gegen einen schwerflüchtigen, wassermischbaren Weichmacher, z.B. Glyzerin, austauscht und die Membran so vor dem Kollabieren der Poren schützt. Der als Porenfüller verwendete Weichmacher beeinträchtigt allerdings die Haftung weiterer Polymerschichten auf der Membranoberfläche sehr stark. Die Herstellung von Komposit-Membranen oder die Verklebung dieser Membrane in Module ist deshalb gegenüber Membranen aus hydrophoben Polymeren erschwert.

Selbstverständlich dürfen bei der Trocknung hydrophiler Membrane aus aromatischen Polyamiden und deren Polymerlegierungen mit einer hohen kritischen Oberflächenspannung, die Membrane nicht kollabieren, weil dies zu einem vollständigen oder verderblich hohen Verlust der Permeabilität der Membrane führen würde.

Einen Überblick über den Stand der Technik auf dem Gebiet der schonenden Trocknung poröser Membrane aus aromatischen Polyamiden gibt die EP-A 0 604 883. Die dort diskutierten Trocknungsverfahren weisen alle schwerwiegende Nachteile auf, sei es durch die Verwendung giftiger und gesundheitsschädlicher Lösemittel als Hilfssubstanzen oder im Einsatz apparativ sehr aufwendiger und teurer Verfahrensschritte. Die EP-A 0 604 883 schlägt zur Lösung der Aufgabe vor, eine poröse, asymmetrische Membran in einer wäßrigen Lösung eines wasserlöslichen Polymers und eines Elektrolyten zu behandeln. Nach der anschließenden Trocknung erhält man poröse Membrane, die frei von Weichmacher sind und eine befriedigende Permeabilität aufweisen.

Dennoch ist auch dieses Verfahren nicht völlig frei von den Nachteilen des konventionellen Verfahrens der Stabilisierung durch Behandlung mit Weichmachern. Die zur Stabilisierung gemäß EP-A 0 604 883 eingesetzten Agentien, nämlich wasserlösliches Polymer und Elektrolyt, verbleiben zumindest partiell im Porenvolumen der Membran. Sie werden beim Anfahren der Membrananlage am konkreten Einsatzort wieder herausgespült. Das zunächst erhaltene Permeat wird deshalb durch die genannten Substanzen verunreinigt. Dieser Effekt kann sich beim Einsatz der Membrane im medizinischen Bereich oder im Lebensmittelsektor sehr störend auswirken, unter Umständen ihren Einsatz dort sogar verbieten.

Da im getrockneten Zustand der Membran ein Teil des Porenvolumens von den Stabilisierungsagentien gefüllt wird, ist die Permeabilität der trockenen Membrane für Gase relativ klein. Die so getrockneten Membrane aus aromatischen Polyamiden eignen sich folglich nur bedingt als poröse Stützmembrane für Composit-Membrane, wie sie für die Umkehrosmose, die Gasseparation und Pervaporation eingesetzt werden.

Aufgrund ihrer Hydrophilie, sowie ihrer chemischen und biologischen Stabilität und insbesondere der Dampfsterilisierbarkeit eignen sich Membrane aus aromatischen Polyamiden prinzipiell sehr gut für den Einsatz in Trennproblemen im medizinischen Bereich, im Lebensmittelsektor und als poröse Stützmembran für Composit-Membrane.

Aus der EP 0 543 171, Beispiel 1 und 4, sind asymmetrische Membranen bekannt, deren Polyamid-Material aus Dicarbonsäure-Einheiten von Terephthal- und gegebenenfalls Isophthalsäure sowie aus Diamin-Einheiten des 2,2-Bis[4-(4'-aminophenoxy)phenyl]propans (= BAP) besteht.

Die Herstellung erfolgt nach dem Phaseninversions-Verfahren. Es wird beschrieben, daß die Membrane mit oder ohne Zusatz von Glyzerin im Luftstrom trockenbar seien. In den Beispielen wird jedoch kein Trocknungsvorgang ausgeführt. Vielmehr werden die Membranproben im nativen, d.h. wasserfeuchten Zustand in Ultrafiltrationsexperimenten charakterisiert. Die Frage der Trocknung ist für die in EP 543 171 beschriebenen Membrane offenbar von geringem Belang. Die Trocknung der Membrane wird an keiner Stelle näher betrachtet, sondern in der Beschreibung nur kurz gestreift. Folglich findet sich keine Bestimmung von Gaspermeabilitäten oder Wasserflüssen an getrockneten Membranproben in der EP 543 171.

Nach jüngeren Untersuchungen der Anmelderin beträgt die Gaspermeation bestimmter Membranproben gemäß EP 543 171 für Stickstoff oder Sauerstoff bis zu mehr als $10^6$ barrer/cm. Eine Definition des Begriffs "barrer" findet sich z.B. in EP-A-0 489 418 (1 barrer = $1 \cdot 10^{-10}$ [$cm^3$(STP)$\cdot$cm]/[$cm^2 \cdot sec \cdot cm_{Hg}$];1/$cm_{Hg}$ =0,075/mbar). Angaben in barrer/cm kennzeichnen eine Membran, Angaben in barrer das Material der Membran (unabhängig von deren Dicke).

Es besteht daher die Aufgabe, weitere Membrane aus aromatischen Polyamiden zu finden, die ebenfalls ohne den Zusatz von Stabilisierungsagentien unter befriedigendem Erhalt ihrer Porosität und ihrer Permeabilität getrocknet werden können.

Es wurde nun eine poröse, asymmetrische Membran gefunden, die als Hauptbestandteil ein aromatisches Polyamid enthält, das aufgebaut ist aus den Struktureinheiten der Formel (I)

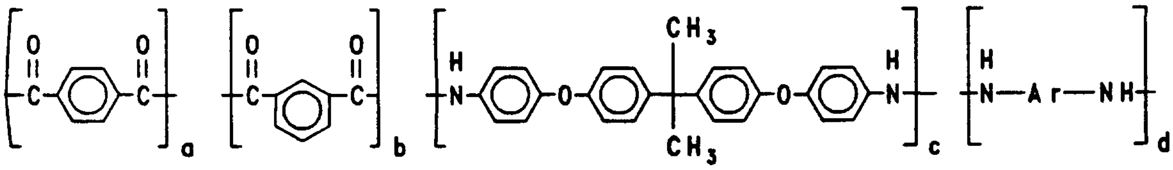

(I)

wobei Ar einen 1,3- oder 1,4-Phenylenrest oder eine Mischung dieser beiden bedeutet und für die Indizes a, b, c und d gilt, daß

$$a + b = 1;$$
$$0{,}9 \leqq c + d \leqq 1{,}1;$$
$$c \geqq 0{,}4 \text{ ist.}$$

Die Membran ist dadurch gekennzeichnet, daß sie ohne Zusatz von Stabilisierungsagentien getrocknet werden kann und daß sie nach der Trocknung eine hydraulische Permeabilität für Wasser von mindestens 20 $l/m^2h$, gemessen bei einem Transmembrandruck von p = 3 bar, sowie eine Gaspermeabilität für Stickstoff, Sauerstoff oder Luft von mindestens $1 \cdot 10^6$ barrer/cm aufweist.

Die erfindungsgemäßen Membrane verlieren beim Trocknungsvorgang ihre Porosität und Permeabilität nicht.

Im Gegensatz zu porösen Membranen aus hydrophoben Polymeren sind die trockenen Membrane aus aromatischen Polyamiden gemäß dieser Erfindung mit Wasser benetzbar, ohne daß oberflächenaktive Hilfsagentien verwendet werden müssen. Das mit den erfindungsgemäßen Membranen erhaltene Permeat ist von Anfang an frei von Stabilisierungs- oder Benetzungsagentien.

Zur Bildung der in der Membran enthaltenen aromatischen Copolyamide sind also ein oder zwei Dicarbonsäurederivate (Indizes a,b) sowie eins bis drei Diaminkomponenten (Indizes c,d) nötig; das Verhältnis der Summe (c + d) zur Summe (a + b) beträgt 0,90:1 bis 1,10:1. Gegebenenfalls können weitere Comonomere in Mengen bis zu 10 mol % bezogen auf die Summe der molaren Mengen der Säurechloride (oder Amine) eingesetzt werden, um spezielle Effekte oder besondere Funktionalitäten zu erzielen, ohne daß die Membran ihre wertvollen Eigenschaften verliert.

Die aromatischen Copolyamide der erfindungsgemäßen Membran werden in bekannter Weise durch Lösungskondensation der aromatischen Dicarbonsäurechloride Terephthalsäuredichlorid und gegebenenfalls Isophthalsäuredichlorid mit den aromatischen Diaminen 2,2-Bis[4-(4'-aminophenoxy)phenyl]propan und gegebenenfalls para-Phenylendiamin oder/und meta-Phenylendiamin in aprotisch polaren Lösemitteln hergestellt. Die Polykondensationsreaktionen werden vorzugsweise so ausgeführt, daß nach Abschluß der Reaktion 3 bis 50 Gew.-%, vorzugsweise 5 bis 35 Gew.-% an Polykondensat in der Lösung vorliegen. Die Polykondensation kann in üblicher Weise, z.B. durch Zugabe von monofunktionellen Verbindungen wie Benzoylchlorid, gestoppt werden. Diese Polykondensationsmethode erlaubt es in Kombination mit der guten Löslichkeit der beschriebenen aromatischen Copolyamide in polar aprotischen Amidlösemitteln, die Molmassen und die Konzentration der aromatischen Copolyamide in der Lösung praktisch unabhängig voneinander zu variieren. Dies gewährt einen beträchtlichen Vorteil in der Flexibilität der Präparation von Membranen, insbesondere von Hohlfasermembranen, im Vergleich zu den in EP 325 962 beschriebenen aromatischen Polyamidmembranen.

Nach Beendigung der Polykondensation, d.h. wenn die Polymerlösung den zur Membranpräparation erforderlichen Staudinger-Index erreicht hat, wird der entstandene Chlorwasserstoff durch Zugabe basischer Substanzen neutralisiert. Der Staudinger-Index ist ein Maß für die mittlere Kettenlänge der entstandenen Polymere. Der Staudinger-Index des aromatischen Copolyamids liegt im Bereich zwischen 50 und 300 $cm^3/g$. Er wurde bestimmt an Lösungen der aromatischen Polyamide in N-Methylpyrrolidon (NMP) bei 25 °C.

Zur Herstellung der erfindungsgemäßen porösen, asymmetrischen Membran wird die Lösung des aromatischen Copolyamids filtriert, entgast und dann in bekannter Weise nach dem Phaseninversionsverfahren (Robert E. Kesting, "Synthetic Polymeric Membranes", 2nd Ed., 1985, S. 237 ff.) eine asymmetrische poröse Membran hergestellt. Zu diesem Zweck wird die Polymerisatlösung auf eine möglichst plane Unterlage als flüssige Schicht ausgebreitet. Die plane Unterlage kann beispielsweise aus einer Glasplatte, aus einer Metalltrommel oder aus einem makroporösen Gewebe oder einem Vlies bestehen. Danach läßt man auf die flüssige Schicht Fällflüssigkeit einwirken, die mit dem Lösemittel der Lösung mischbar ist, in der aber die gelösten aromatischen Copolyamide als Membran ausgefällt werden.

In bekannter Weise können die erfindungsgemäßen Membrane auch als Schlauchmembrane hergestellt werden. Zu diesem Zweck wird beispielsweise die Innenseite geeigneter, schlauchförmiger, makroporöser Träger mit Polymerlösung beschichtet und anschließend der Schlauch in Fällflüssigkeit eingetaucht.

Die Dicke der erfindungsgemäßen Membran liegt im Bereich von 10 bis 300 µm, insbesondere von 20 bis 120 µm.

Zur Herstellung der erfindungsgemäßen Membran in Form von Hohlfaser- oder Kapillarmembranen wird die Lösung der aromatischen Copolyamide nach dem Stand der Technik durch eine Ringspalt- oder Hohlnadeldüse in Fällflüssigkeit eingesponnen. Das innere Volumen des Hohlfadens wird durch Fällflüssigkeit oder Luft gebildet, welche durch eine konzentrische, innere Düse gedrückt wird. Hierbei können nach dem Stand der Technik die Herstellungsbedingungen so gewählt werden, daß sich eine Außen- oder Innenhaut oder beides bilden. Die Wandstärke derartiger Kapillaren und Hohlfasern liegt üblicherweise im Bereich von 20 bis 500 µm.

Durch die Zugabe von Polyvinylpyrrolidon (PVP) gemäß EP-A-0 382 009 zur Polymerlösung ist es möglich, ein homogenes gemischtes Polymerblend herzustellen, das eine höhere Hydrophilie und (in Membranform) eine höhere Trennleistung aufweist. Die erhöhte Hydrophilie der integral asymmetrischen Membran führt zu

einer geringeren Verblockungsneigung, d.h. zu einem günstigen Foulingverhalten (geringerer Flußabfall pro Zeiteinheit und Stabilisierung des Produktflusses auf einem hohen Niveau): Die höhere Hydrophilie des Polymerblends im Vergleich zu den aromatischen Copolyamiden zieht allerdings ganz zwangsläufig eine Erhöhung der kritischen Oberflächenspannung des membranbildenden Polymers nach sich. Die Kräfte, die zu einem Kollabieren der porösen Membran aus aromatischen Copolyamiden während des Trocknungsvorganges führen, werden also im allgemeinen durch den Zusatz des hydrophilen Blendpartners PVP größer. Überraschend wurde für die erfindungsgemäßen Membrane gefunden, daß sie auch dann ohne Zusatz stabilisierender Agentien getrocknet werden können, wenn sie aus einem Blend der beschriebenen aromatischen Copolyamide mit PVP bestehen. Diese Blendmembrane vereinen in ganz besonders vorteilhafter Weise die chemische, thermische und biologische Stabilität der aromatischen Copolyamidmembranen mit weiter erhöhter Hydrophilie und der für die Erfindung charakteristischen Eigenschaft, ohne Zusatz von Hilfssubstanzen trockenbar und wieder mit Wasser benetzbar zu sein.
Bei Zusatz von Polyvinylpyrrolidon wird dieses in Mengen von 1 bis 100 Gew.-%, vorzugsweise 20 bis 80 Gew.-%, bezogen auf die Masse des Polyamids, zugesetzt. Das Molekulargewicht des Polyvinylpyrrolidons liegt dabei im Bereich von 10.000 bis 2.000.000 g/mol (angegeben als Gewichtsmittel), vorzugsweise im Bereich von 20.000 bis 1.000.000 g/mol.

Die Erfindung wird durch die Beispiele näher erläutert.

Beispiele:

Die in den Beispielen hergestellten porösen Membrane wurden mit folgenden Methoden charakterisiert:
Der Wasserfluß einer Ultrafiltrationsmembran und das Rückhaltevermögen gegenüber gelösten Makromolekülen wurden bei Drücken von 3,0 bar bei 20 °C in einer gerührten zylindrischen Zelle bestimmt (250 ml Volumen, 38 $cm^2$ Membranfläche, 500 U/min). Das Rückhaltevermögen ist definitionsgemäß

$$R = [(c_1 - c_2)/c_1] * 100 [\%].$$

Dabei ist $c_1$ die Konzentration der wäßrigen Testlösung, $c_2$ die Konzentration im Permeat. Die Konzentrationen wurden durch Dichtemessungen bestimmt. Als Testlösungen wurden wäßrige Polyvinylpyrrolidonlösungen sowie wäßrige Lösungen fraktionierter Dextrane verwendet:

K30: Polyvinylpyrrolidon $M_w$ = 49.000 g/mol, $^R$Luviskol K30, BASF, 2 %ige wäßrige Lösung
T10: Dextran $M_w$ = 10.000 g/mol, $^R$Dextran T10, Pharmacia, 1 %ige wäßrige Lösung
T2000: Dextran $M_w$ = 1.000.000 g/mol, $^R$Dextran T2000, Pharmacia, 1 %ige wäßrige Lösung

Die Gaspermeabilität der trockenen Membrane wurde in einer Edelstahlzelle (Membranfläche 12,6 $cm^2$) mit einem evakuierbaren Permeatvolumen von 6,7 $cm^3$ ermittelt. Die Membranprobe wurde auf der Zulaufseite mit einem Reingas ($O_2$,$N_2$) von p = 1 bar beaufschlagt. Nach Absperren der Verbindung des evakuierten Permeatvolumens mit der Vakuumpumpe wurde die Geschwindigkeit des Druckanstiegs auf der Permeatseite gemessen und daraus die Permeabilität der Membranprobe bestimmt. Die Permeabilität wird angegeben in [barrer/cm], wobei

$$1 \text{ barrer} = 1 \cdot 10^{-10} \ (cm^3(STP) \cdot cm)/(cm^2 \cdot sec \cdot cm_{Hg})$$

Beispiel 1:

Ein aromatisches Copolyamid wurde aus
0,80 mol Terephthalsäuredichlorid (TPC),
0,20 mol Isophthalsäuredichlorid (IPC),
0,721 mol 2,2'-Bis[4-(4'-aminophenoxy)phenyl]propan (BAB)
und
0,309 mol para-Phenylendiamin (PPD)
bei einer Temperatur von 40 °C in NMP polykondensiert. Die Ausgangskonzentration der Lösung betrug 20 Gew.-%. Durch Zugabe von NMP wurden die in Tabelle 1 angegebenen Konzentrationen zur Herstellung von Membranen eingestellt. Die Membrane wurden auf einem Polypropylen-Vlies durch Koagulation in Wasser präpariert. Um die gewünschten Membraneigenschaften zu erzielen, wurden Polyvinylpyrrolidon ($^R$Luviskol K30, $^R$Luviskol K90, BASF) als Blendpartner oder hochporöse Kieselerde ($^R$Aerosil 200, Degussa) als Additive der verdünnten Polymerlösung zugegeben. Sie wurden nach den oben angegebenen Methoden in Ultrafiltrationsexperimenten charakterisiert. Proben der Membrane wurden ohne Zusatz von Stabilisierungsagentien 16 Stunden bei Raumtemperatur getrocknet. Von diesen Proben wurde der Wasserfluß unter Ultrafiltrationsbedingungen bestimmt.

Tabelle 1

| Konz. Polymerlsg. | Additiv l/m²h | Wasserfluß[1] l/m²h | Wasserfluß[2] l/m²h | Rückhalteverm. | |
|---|---|---|---|---|---|
| | | | | K30 | T2000 |
| 12 % | 3 % PVP K30 | 2500 | 40 | 56 % | 95 % |
| 8 % | 4 % PVP K90 | 1200 | 60 | < 5 % | 45 % |
| 8 % | 4 % PVP K90 + 2 % Aerosil | 2600 | 58 | < 3 % | 40 % |

1 Wasserfluß der nativen, wasserfeuchten Membran bei p = 3 bar
2 Wasserfluß der getrockneten Membran bei p = 3 bar

Beispiel 2:

Analog zu Beispiel 1 wurde ein aromatisches Copolyamid aus
0,80 mol TPC,
0,20 mol IPC,
0,721 mol BAB und
0,309 mol meta-Phenylendiamin (MPD)
hergestellt. Analog Beispiel 1 wurden Membrane präpariert und charakterisiert.

Tabelle 2

| Konz. Polymerlsg. | Additiv l/m²h | Wasserfluß[1] l/m²h | Wasserfluß[2] l/m²h | Rückhalteverm. | |
|---|---|---|---|---|---|
| | | | | K30 | T2000 |
| 12 % | 3 % PVP K30 | 2800 | 50 | 20 % | 65 % |
| 8 % | 4 % PVP K90 | 1350 | 75 | < 5 % | 50 % |
| 8 % | 4 % PVP K90 + 2 % Aerosil | 1800 | 82 | < 5 % | 33 % |

1 Wasserfluß der nativen, wasserfeuchten Membran bei p = 3 bar
2 Wasserfluß der getrockneten Membran bei p = 3 bar

Beispiel 3:

Ein aromatisches Copolyamid wurde aus
1,00 mol TPC und
1,04 mol BAB
bei einer Temperatur von 70 °C in NMP polykondensiert. Die Konzentration der Lösung war c = 16 Gew.-%. Eine Kapillarmembran mit Innendurchmesser $d_1$ = 1,2 mm wurde durch Verspinnen dieser Lösung aus einer Ringspaltdüse in ein Fällbad aus Wasser hergestellt. Als innere Fällflüssigkeit wurde ebenfalls Wasser verwendet. Die Luftstrecke zwischen Ringspaltdüse und äußerem Fällbad betrug 30 cm.
Zur Charakterisierung wurde eine einzelne Hohlfaser zwischen zwei Kanülen eingespannt. Das Ultrafiltrationsexperiment wurde mittels einer Umwälzpumpe unter cross-flow Bedingungen bei einer Überströmgeschwindigkeit von 3 m/s durchgeführt. Der mittlere Transmembrandruck $p_{TM} = (p_E + p_A)/2$ betrug $p_{TM}$ = 3,5 bar, wobei $p_E$ = Transmembrandruck am Fasereingang und $p_A$ = Transmembrandruck am Faserausgang.

Wasserfluß der feuchten Membran: F = 40 l/m²h
Rückhaltevermögen: R(K30) = 78 %

Eine Probe der Hohlfasermembran wurde ohne Zusatz von Stabilisierungsagentien getrocknet und ihre Permeabilität für Wasser wie oben angegeben bestimmt:

Wasserfluß der getrockneten Membran: F = 22 l/m²h.

Beispiel 4:

Ein aromatisches Copolyamid wurde aus
0,85 mol TPC,
0,15 mol IPC und
1,02 mol BAB
bei einer Temperatur von 65 °C in NMP polykondensiert. Die Konzentration der Lösung betrug c = 20 Gew.-%. Sie wurde durch Zugabe von weiterem NMP und gegebenenfalls Nichtlösemitteln und/oder Additiven auf die in Tabelle 3 angegebenen Zusammensetzungen verdünnt. Flachmembrane wurden durch Ausstreichen der Lösung auf einem PP-Trägervlies und Koagulation in Wasser hergestellt. Sie wurden 24 h in Wasser gelagert und dann bei Raumtemperatur getrocknet. Die trockenen Membrane wurden durch Ultrafiltrationsexperimente bei p = 6 bar und Messung der Gaspermeabilität charakterisiert.

Tabelle 3

| Konz. Polymerlsg. | Additiv[1] $l/m^2h$ | Wasserfluß $l/m^2h$ | Gasperm. barrer/cm | Rückhalteverm. | |
|---|---|---|---|---|---|
| | | | | T10 | K30 |
| 15 % | | 260 | $4 \cdot 10^7$ | 75 % | 91 % |
| 10 % | 3 % PVP K30 | 1880 | $5 \cdot 10^6$ | | 77 % |
| 15 % | 3 % Aerosil | 660 | $1{,}2 \cdot 10^8$ | 40 % | 94 % |
| 15 % | 3 % PEG 400 | 225 | $6 \cdot 10^7$ | 62 % | 96 % |
| 15 % | 10 % Glyzerin | 48 | $8 \cdot 10^7$ | 93 % | 97 % |

1 Aerosil: hochporöse Kieselerde $^R$Aerosil 200, Degussa
PEG 400: Polyethylenglykol MW = 400 g/mol

Vergleichsbeispiel 5:

Ein aromatisches Copolyamid, welches keine erfindungsgemäße Membran liefert, wurde aus
0,97 mol TPC,
0,25 mol PPD,
0,50 mol 3,3'-Dimethyl-4,4'-diaminobiphenyl und
0,25 mol 1,4-bis(4'-aminophenoxy)benzol (BAPOB)
in NMP bei T = 50 °C polykondensiert. Die Konzentration des aromatischen Copolyamids betrug 6 Gew.-% (Gewichtsteile bezogen auf 100 Gewichtsteile Lösung). Zur Lösung wurden 4 Gew.-% PVP K30 ($^R$Luviskol K30, BASF) bezogen auf die Masse der Lösung gegeben. Die viskose Lösung wurde auf einem Polypropylen-Trägervlies ausgestrichen und in Wasser bei 22 °C koaguliert. Die wasserfeuchte Membran hatte im Ultrafiltrationsexperiment einen Wasserfluß von F = 460 $l/m^2h$ und einen Rückhalt für PVP K30 von R = 87 %. Eine Probe der Membran wurde ohne Zusatz eines Stabilisierungsagens 16 Stunden bei Raumtemperatur getrocknet. Die getrocknete Membran zeigte keine Gaspermeabilität. Sie zeigte auch nach längerem Konditionieren in Wasser keinen Wasserfluß.

Vergleichsbeispiel 6:

Ein aromatisches Copolyamid, welches keine erfindungsgemäße Membran liefert, wurde aus
0,98 mol TPC,
0,50 mol PPD,
0,375 mol MPD und
0,125 mol BAPOB
bei einer Temperatur von 70 °C in NMP hergestellt. Die Konzentration der Lösung betrug 10 Gew.-%. Diese Lösung wurde in einer Schichtdicke von 200 µm auf ein Polyethylenterephthalat-Trägervlies aufgebracht und in Wasser bei 20 °C koaguliert.
Eine Naßprobe der Membran wurde im Ultrafiltrationsexperiment charakterisiert:
Wasserfluß F = 300 $l/m^2h$
Rückhalt R(K30) = 86 %
Eine Probe der Membran wurde gemäß der EP-A 0 604 883 in einer wäßrigen Lösung von 4 % PVP K30

und 5 % NaCl behandelt und anschließend 2 Stunden bei 50 °C getrocknet. Die anschließende Charakterisierung im Ultrafiltrationsexperiment ergab:

Wasserfluß F = 150 $l/m^2h$

Rückhalt R(K30) = 83 %

Im Gaspermeationsexperiment wies eine Probe der Membran eine Permeabilität von

$$P < 5 \cdot 10^5 \text{ barrer/cm}$$

auf.

Die Beispiele lehren, daß die erfindungsgemäßen Membrane aus aromatischen Polyamiden das eingangs geschilderte Problem der Trocknung von porösen, hydrophilen Membranen lösen. Tabelle 4 faßt noch einmal die Werte für die Wasserflüsse und Gaspermeabilitäten der getrockneten, erfindungsgemäßen Membrane im Vergleich zum Stand der Technik zusammen.

| Beispiel Nr. | Wasserfluß trocken ($l/m^2h$) | Gaspermeabilität (barrer/cm) |
|---|---|---|
| 1 | ≧ 40 | n.b. |
| 2 | ≧ 50 | n.b. |
| 3 | 22 | n.b. |
| 4 | ≧ 48 | $\geqq 5 \cdot 10^6$ |
| Vergleich 5 | < 1 | $< 10^4$ |
| Vergleich 6 | 150 | $< 5 \cdot 10^5$ |

Im Vergleich zu getrockneten Membranen aus aromatischen Polyamid/PVP Legierungen gemäß EP 0 382 009 (Vergleichsbeispiel 5) sind die Wasserflüsse aller erfindungsgemäßen Membrane der Beispiele 1 - 4 um mindestens den Faktor 20 höher. Mit dem in der EP-A 0 604 883 vorgeschlagenen Verfahren (Vergleichsbeispiel 6) erhält man trockene Membrane, die im wieder bewässerten Zustand sehr gute Flüsse liefern. Die Stabilisierungsagentien füllen jedoch partiell das Porenvolumen und vermindern die Gaspermeabilität. Die Gaspermeabilität der erfindungsgemäßen Membrane nach Beispiel 4 ist mindestens zehnmal höher.

**Patentansprüche**

**1.** Poröse, asymmetrische Membran enthaltend als Hauptbestandteil ein aromatisches Polyamid aufgebaut aus den Struktureinheiten der Formel (I)

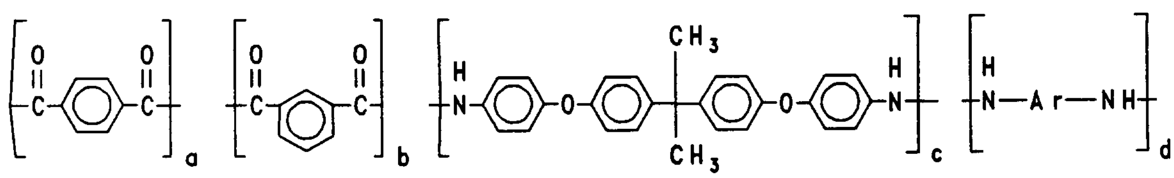

(I)

wobei Ar einen 1,3- oder 1,4-Phenylenrest oder eine Mischung dieser beiden bedeutet und für die Indizes a, b, c und d gilt, daß

$$a + b = 1;$$
$$0{,}9 \leq c + d \leq 1{,}1;$$
$$c \geq 0{,}4 \text{ ist,}$$

dadurch gekennzeichnet, daß die Membran ohne Zusatz von Stabilisierungsagentien getrocknet werden kann und daß die Membran nach der Trocknung eine hydraulische Permeabilität für Wasser von mindestens 20 $l/m^2h$, gemessen bei einem Transmembrandruck von p = 3 bar, sowie eine Gaspermeabilität für Stickstoff, Sauerstoff oder Luft von mindestens $1 \cdot 10^6$ barrer/cm aufweist.

2. Poröse, asymmetrische Membran gemäß Anspruch 1, dadurch gekennzeichnet, daß d größer als Null ist.

3. Poröse, asymmetrische Membran gemäß Anspruch 2, dadurch gekennzeichnet, daß d mindestens 0,05 ist.

4. Poröse, asymmetrische Membran nach einem der Ansprüche 1 bis 3, dadurch gekennzeichnet, daß sie aus einer Mischung oder Logierung des aromatischen Polyamids mit Polyvinylpyrrolidon besteht.

5. Poröse, asymmetrische Membran nach einem der Ansprüche 1 bis 4, dadurch gekennzeichnet, daß sie eine Flachmembran ist.

6. Poröse, asymmetrische Membran nach einem der Ansprüche 1 bis 4, dadurch gekennzeichnet, daß sie eine Schlauchmembran ist.

7. Poröse, asymmetrische Membran nach einem der Ansprüche 1 bis 4, dadurch gekennzeichnet, daß sie eine Hohlfaser- oder Kapillarmembran ist.